(19) Europäisches Patentamt European Patent Office Office européen des brevets

(11) **EP 1 275 664 B1**

(12) **EUROPEAN PATENT SPECIFICATION**

(45) Date of publication and mention
of the grant of the patent:
**21.02.2007 Bulletin 2007/08**

(51) Int Cl.:
**C08F 10/02** (2006.01)

(21) Application number: **01202566.4**

(22) Date of filing: **03.07.2001**

(54) **Linear high density polyethylene resins and films, methods and systems for making same**

Lineare Polyethylenharze und Polyethylenschichten mit hoher Dichte, Verfahren und Systeme zu deren Herstellung

Resines et films de polyethylene lineaire haute densite, leurs procedes et systemes de fabrication

(84) Designated Contracting States:
**AT BE CH CY DE DK ES FI FR GB GR IE IT LI LU MC NL PT SE TR**

(43) Date of publication of application:
**15.01.2003 Bulletin 2003/03**

(73) Proprietor: **TOTAL PETROCHEMICALS RESEARCH FELUY**
**7181 Seneffe (Feluy) (BE)**

(72) Inventors:
• **Gray, Steven D.**
**League City,**
**Texas 77573 (US)**
• **Knoeppel, David W.**
**Webster,**
**Texas 77062 (US)**
• **Coffy, Tim J.**
**Houston,**
**Texas 77062 (US)**
• **Goins, Mike**
**Houston**
**Texas 77089 (US)**
• **McLeod, Michael**
**Seabrook,**
**Texas 77586 (US)**
• **DeKunder, Greg**
**Pearland,**
**Texas 77584 (US)**

(74) Representative: **Leyder, Francis et al**
**Total Petrochemicals Research Feluy**
**Zone Industrielle C**
**7181 Seneffe (Feluy) (BE)**

(56) References cited:
**EP-A- 0 729 978      US-A- 5 710 224**
**US-A- 6 110 549**

Remarks:
The file contains technical information submitted after the application was filed and not included in this specification

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

1. Field of the Invention

The present invention relates to high density polyolefin resin and polyolefin films, and to methods and systems for producing such resins and films. In another aspect, the present invention relates to high density polyethylene (HDPE), films made from HDPE, and to methods and systems for producing HDPE resins and HDPE films. In even another aspect, the present invention relates to linear HDPE resins, films of exceptional clarity made from such linear HDPE, and to methods and systems for producing such HDPE resins and films.

2. Description of the Related Art

Having been around since the early 1950's, Ziegler-type polyolefin catalysts, their general methods of making, and subsequent use, are well known in the polymerization art. While much is known about Ziegler-type catalysts, there is a constant search for improvements in their polymer yield, catalyst life, catalyst activity, and in their ability to produce polyolefins having certain properties.

Polyolefins, for example polyethylene or polypropylene, have an extremely wide range of applications which include materials and containers in the form of films, sheets, or hollow articles. Tailoring the properties of polyolefins to fit a desired applicability is constantly ongoing.

When light passes through a sheet or film of polyolefin, scattering can cause the light to deviate from the incident direction. If the scattering is significant enough, it will cause a reduction in the transmitted light and the sample will appear to be hazy. This scattering can be from either surface imperfections which are generally related to low gloss, or from scattering bodies within the sample itself. In the case of polyethylene, the scattering bodies are from the regions of high crystalline polymer which increase as the polymer density increases. Increasing the polymer density is achieved by increasing both the size and quantity of crystalline lamella at the expense of the amorphous polyethylene. Therefore, it is normal to observe a decrease in the clarity of conventional polyethylene blown film as the density of the bulk polymer increases. Additionally, it is normal to observe a decrease in the gloss of the film as the density of the polymer increases.

U.S. Patent No. 6,110,549, issued August 29, 2000 to Hamiota et al., discloses a sealant resin composition for producing sealant film. The Hamiota resin comprises a high density polyethylene as the main component and a linear low density polyethylene polymerized by use of the metallocene catalyst.

U.S. Patent No. 6,045,882 issued April 4, 2000 to Sandwort, discloses a multilayer, biaxially stretched, flexible, thermoplastic film comprising at least two surface layers and a core layer disposed there between. Each of the two surface layers comprise a blend of a copolymer of ethylene and a $C_3$-$C_{10}$, $\alpha$-olefin, and a high density polyethylene.

U.S. Patent No. 6,027,776 issued February 22, 2000 to Mueller, discloses multilayer films for packaging and administering medical solutions wherein the films comprise improved optical properties. The Mueller films generally include: a) an interior layer of homogeneous ethylene/alpha-olefin copolymer; b) a first exterior layer of a material selected from the group consisting of homopolymer or copolymer of polypropylene, a blend of homopolymer or copolymer of polypropylene and elastomer, high density polyethylene, and copolyester; and c) a second exterior layer of a material selected from the group consisting of polyamide, copolyamide, polyester, copolyester, high density polyethylene, polypropylene, propylene/ethylene copolymer, and polycarbonate.

U.S. Patent No. 5,852,152, issued December 22, 1398 to Walton et al., discloses a biaxially oriented, heat-shrinkable film-making process and film with improved toughness and extrusion processability. The Walton film comprises a layer of at least one substantially linear ethylene homopolymer or interpolymer, wherein the substantially linear ethylene polymer essentially lacks a measurable "high density" fraction.

In spite of the advancements in the art, high density polyethylene homopolymer with a narrow molecular weight distribution and a highly linear backbone has not been described.

Furthermore, a linear high density polyethylene homopolymer resin useful in producing films of superior clarity and gloss has not been described.

Thus, there is a need in the art for a high density polyethylene homopolymer resin having a highly linear backbone and narrow molecular weight distribution.

There is another need in the art for a high density polyethylene homopolymer resin having better barrier properties than a conventional resin of equivalent clarity.

There is even another need in the art for methods of producing such high density polyethylene homopolymer resins.

There is still another need in the art for blown films produced from high density polyethylene homopolymer resin, said films having exceptional clarity and gloss characteristics.

There is yet another need in the art for methods of producing such films.

There is even still another need in the art for a system useful in producing such high density polyethylene resins and films.

These and other needs in the art will become apparent to those of skill in the art upon review of this specification, including its claims.

SUMMARY OF THE INVENTION

It is an object of the present invention to provide a high density polyethylene homopolymer resin having a highly linear backbone and narrow molecular weight distribution.

It is another object of the present invention to provide a high density polyethylene homopolymer resin having better barrier properties than a conventional resin of equivalent clarity.

It is even another object of the present invention to provide methods of producing such high density polyethylene homopolymer resins.

It is still another object of the present invention to provide blown films produced from said high density polyethylene resins, said films having exceptional clarity and gloss characteristics.

It is yet another object of the present invention to provide methods of producing such films.

It is even still another object of the present invention to provide a system useful in producing high density polyethylene homopolymer resins and films.

These and other objects of the present invention will become apparent to those of skill in the art upon review of this specification, including its claims.

One embodiment of the present invention is directed to an $\alpha$-olefin polymer. Preferably the polymer of the invention is a medium molecular weight (MMW) high density polyethylene (HDPE). The backbone of the HDPE of the invention is essentially linear and contains essentially no long chain branching. In addition, the HDPE of the invention comprises a rheological breadth parameter "a" of greater than 0.25 and a narrow molecular weight distribution (MWD) of less than 7.0.

Another embodiment of the invention is directed to a process for $\alpha$-olefin polymerization. Generally the process comprises the steps of: a) contacting one or more $\alpha$-olefin monomers together in the presence of a catalyst under polymerization conditions; and b) extracting polyolefin homopolymer. Preferably, the monomers are ethylene monomers and the polymer is a linear high density polyethylene homopolymer. The polymer may also be a copolymer containing predominantly ethylene with small amount of a second type of $\alpha$-olefin monomer The polymerization process of the invention favors the forward polymerization of ethylene and produces a highly linear polyethylene homopolymer comprising a rheological breadth parameter "a" of greater than 0.25 and a narrow molecular weight distribution (MWD) of less than 7.0.

Even another embodiment of the invention is directed to a polyolefin film. Generally the films are HDPE homopolymer films and have exceptional clarity in comparison to conventional HDPE-derived films.

Still another embodiment of the invention provides methods for making such polyolefin films. Generally the HDPE films of the invention are produced on a film line and are produced in the pocket. This film line configuration is known in the art for producing linear low density polyethylene (LLDPE).

Yet another embodiment of the invention provides systems useful for producing highly linear HDPE resins and films.

DETAILLED DESCRIPTION OF THE INVENTION

The present invention is directed to high density polyethylene (HDPE), HDPE films, and methods and systems for producing HDPE resins and films. The HDPE resin of the present invention is a medium molecular weight HDPE (MMW-HDPE) homopolymer having a narrow molecular weight distribution (MWD), a highly linear backbone, low shear thinning behavior, and is extremely well suited for producing high density film grade. In addition, the linear HDPE homopolymer of the invention contains extremely low levels of catalyst residues, thus allowing a virgin powder to be extruded into readily handled pellet form without significant polymer degradation and/or formation of long chain branches.

Generally the MWD of the HDPE of the invention is less than 7.0, preferably less than 6.5, more preferably less than 6.0. The density of the HDPE of the invention is generally greater than 0.950 g/cc, preferably greater than 0.955 g/cc, and more preferably greater than 0.960 g/cc. The HDPE generally has a MI2 in the range of 0.5 dg/min to 5.0 dg/min, more preferably in the range of 0.9 dg/min to 3.0 dg/min, and most preferably in the range of 1.2 dg/min to 2.5 dg/min.

The HDPE of the invention is stable upon extrusion and has a rheological breadth parameter "a" greater than conventional HDPE resins. For resins with no differences in levels of long chain branching (LCB), it has been observed that the rheological breadth parameter "a" is inversely proportional to the breadth of the molecular weight distribution. Similarly, for samples which have no differences in the molecular weight distribution, the breadth parameter "a" has been found to be inversely proportional to the level of long chain branching. An increase in the rheological breadth of a resin is therefore seen as a decrease in the breadth parameter "a" value for that resin. This correlation is a consequence of the changes in the relaxation time distribution accompanying those changes in molecular architecture. Generally the HDPE resin of the invention has a rheological breadth parameter "a" of greater than 0.25, preferably greater than 0.30.

Another embodiment of the invention provides a process for polymerization of $\alpha$-olefin monomers, wherein the monomers are generally ethylene. The polymerization process of the invention may be bulk, slurry or gas phase, although it is generally preferred to use a slurry phase polymerization, more preferably a loop reactor.

It is preferred that the virgin resin of the invention have an extremely low level of catalyst residues in order to avoid degradation upon extrusion. The production conditions described below, which favor strong forward polymerization, are key to increasing catalyst activity and limiting catalyst residues in the ultimate product.

In order to generate highly linear polymer, it is preferred that the polymerization conditions utilized herein strongly favor the forward polymerization of ethylene and minimize the possibility of termination of the growing polymer chain via beta hydrogen elimination. Employing a high ethylene concentration in the polymerization process, as well as use of high reactor temperatures, creates such an environment. Generally the ethylene concentration used herein is in a range of 1.0% to 10.0%, preferably 3.0% to 8.0%. The reactor temperature is generally a temperature in the range of 82,1$\underline{o}$C (180°F) to 110$\underline{o}$C (230°F), preferably in the range of 87,7$\underline{o}$C (190°F) to 107,2$\underline{o}$C (225°F), more preferably in the range of 93,3$\underline{o}$C (200°F) to 104,4$\underline{o}$C(220°F). The use of aluminum cocatalyst levels generally in the range of 10 ppm to 300 ppm with respect to the diluent, also appears to inhibit elimination pathways leading to LCB. Preferably the cocatalyst levels are in the range of 50 ppm to 200 ppm with respect to the diluent, more preferably in the range of 25 ppm to 150 ppm.

The olefin monomer may be introduced into the polymerization reaction zone in a nonreactive heat transfer diluent agent which is liquid at the reaction conditions. Examples of such a diluent are hexane and isobutane. Preferably the diluent is isobutane.

Generally the polymer produced herein is a homopolymer. However, for copolymerization of ethylene with another alpha-olefin, such as, for example, butene or hexene, the second alpha-olefin may be present at 0.01-20 mole percent, preferably 0.02-10 mole percent.

It is preferred that the catalyst system employed herein behave in a controlled manner under the aggressive reactor conditions needed to ensure high activity. Generally the activity/productivity of the catalyst used herein is greater than 30,000 gPE/g catalyst, preferably greater than 40,000 gPE/g, more preferably greater than 50,000 gPE/g. The catalyst system must not only behave well chemically, but it must have physical properties allowing even flow of the suspended catalyst to the reactor to be readily achieved. Catalysts with a well-defined size and shape (i.e. overall morphology) assist in maintaining steady reaction at the vigorous production conditions needed. The bulk morphology of the polymer produced is a function of the catalyst and is also critical. The morphology of the polymer produced must be amiable to the particular production process employed. For example, a loop process, in which polymer is removed from the reactor via settling legs, the morphology of the product (size, shape, bulk density, uniformity) has a significant effect on the maximum allowable slurry concentration and, in turn, the overall residence time and productivity of the catalyst system.

Still another embodiment of the invention provides a HDPE film comprising exceptional clarity (i.e., low haze) and gloss in comparison to conventional high density polyethylene films. Generally the films of the invention are produced by blowing, casting, or extrusion. Preferably the films of the invention are blown films. The films of the invention are suitable for any film application and/or product known in the art such as, for example, packaging of food and produce.

The films of the invention generally comprise a layer of resin comprising a polymer wherein the polymer is the HDPE of the invention. Generally, the thickness of the films are up to $1,27.10^{-4}$m (5.0 mil), preferably in the range of $2,54.10^{-6}$m (0.1 mil) to $0,762.10^{-4}$m (3.0 mil). The haze value of the HDPE films of the invention is generally no greater than 40%, preferably no greater than 35%, more preferably no greater than 30%. The gloss of the HDPE films of the invention is generally greater than 20%, preferably greater than 30%, more preferably greater than 40%.

The haze properties and gloss properties, respectively, of HDPE films of the invention versus conventional films of equivalent thicknesses were compared. The HDPE films of the invention are of significantly improved clarity and gloss in comparison to conventional films comprising conventional MMW HDPE.

The HDPE resins of the present invention also have better barrier properties than a conventional LLDPE of equivalent clarity and thickness. The HDPE films of the invention have lower water vapor transmission rates (WVTR) than conventional LLDPE films.

The HDPE films of the present invention also have improved stiffness in comparison to HDPE copolymer films of equivalent clarity. The secant modulus at 2% for films of the invention of different thicknesses, in comparison to conventional films of equivalent thickness was measured for each of the films of the invention, the secant modulus at 2% is significantly greater than that of a copolymer of equivalent clarity and thickness.

The films of the present invention may be single layer or multilayered films. For multilayered films of the invention, the polymers employed in the additional layers may be selected from any of the polymeric materials known in the art to be useful in producing films. Thus, for a multilayered film of the invention, the polymers of the additional layers need not be limited to polymers of ethylene but could be any homopolymer or copolymer known in the art such as, propylene-butene copolymer, poly(butene-1), styreneacrylonitrile resin, acrylonitrile-butadiene-styrene resin, polypropylene, ethylene vinyl acetate resin, polyvinylchloride resin, poly(4-methyl-1-pentene), any low density polyethylene, and the like. Multilayer films of the invention may be formed using techniques and apparatus generally well known by one of skill in the art, such as, for example co-extrusion, and lamination processes.

Selection of the polymer for each of the additional layers of the multi-layered barrier grade films of the invention is dependent largely upon the application of the multi-layered film. Thus, for the multilayer films of the invention, the additional layers are selected because of a desired property such as, for example, strength, or stiffness, the layer would contribute to the film.

An example of a preferred multilayered film of the invention is a three layer polyethylene coextruded blown film converted into a pillow package on any machine known to be useful in the art such as, a VFFS machine. The multilayer film comprises three layers wherein the core or middle layer comprises m-LLDPE, LLDPE, LDPE, and any blends thereof; the outer layer comprises MDPE, the HDPE of the invention, or any blend thereof; and the inner layer comprises ethylene vinyl acetate, m-LLDPE, or any blends thereof. The core or middle layer provides stiffness and puncture and tear resistance to the film and is a thickness in the range of $2,54\ 10^{-5}$m (1.0 mils) to $6,35\ 10^{-5}$m (2.5 mils). The outer layer provides heat resistance and/or clarity to the film and is a thickness in the range of $2,54\ 10^{-6}$ m (0.1 mils) to $1,27\ 10^{-5}$ m (0.5 mils). The inner layer provides sealant function to the film and is a thickness in the range of $7,62\ 10^{-6}$ m (0.3 mils) to $1,54\ 10^{-5}$ m (0.6 mils). This particular multilayer film of the invention is well suited for use in food service or institutional fresh produce packaging.

Yet another embodiment of the invention is directed to methods for producing a blown film. The process generally comprises blowing a composition into a film, wherein the composition comprises HDPE homopolymer of the invention. The films of the invention may be produced on any film line, such as, for example, an Alpine film line. The films of the invention are made in the pocket, thus the film line is used in the configuration known in the art for producing LLDPE wherein the neck height is about zero inches (i.e., no neck). The air ring of the extruder is generally opened wide to increase bubble stability by maintaining a low air velocity, thus providing a die gap in the range of 0.5 mm to 2.5 mm.

Additional processing variables are generally as follows: extruder running at a speed in the range of 65 rpm to 150 rpm; zone 1 temperature in the range of $148,8\underline{o}C$ (300°F) to $204,4\underline{o}C$ (400°F) zone 2 temperature in the range of $148,8\underline{o}C$ (300°F) to $204,4\underline{o}C$ (400°F); zone 3 temperature in the range of $148,8\underline{o}C$ (300°F) to $204,4\underline{o}C$ (400°F); die 1 temperature in the range of $148,8\underline{o}C$ (300°F) to $204,4\underline{o}C$ (400°F); die 2 temperature in the range of $148.8\underline{o}C$ (300°F) to $204,4\underline{o}C$ (400°F); die 3 temperature in the range of $148,8\underline{o}C$ (300°F) to $204,4\underline{o}C$ (400°F).

Other extruders known in the art, such as for example, Kiefel, Gloucester, Reifenhauser, Macchi; CMG, and other equivalent blown film extruders, are also applicable herein for producing the films of the invention.

As is known in the art for improving processability of a polymer, a processing aid such as, for example, Viton GB, Viton SC, Dynamar FX9613, FX5911, any fluoroelastomer, any fluoropolymer, and any of the other equivalent materials known by one of skill in the art, may be included in the polymer composition to be blown on the film line. Such processing aids and specifications of their use are known in the art.

In some applications it may be desirable to include a slip/anti-block agent in any of the one or more polymer layers of the present films, particularly for layers produced from polymers having a density of less than 0.925 g/cc. Generally such materials are inorganic compounds and include, for example, mica, talc, silica, calcium carbonate, and the like.

In addition, the resins of the films of the invention may comprise any of the other processing additives known in the art such as, heat stabilizers, weather stabilizers, lubricants, etc, in amounts that do not impact unduly on the objects of the present invention. These processing aids and the specifications of using such aids are well known in the art.

For producing a multilayer film of the invention using co-extrusion methods, it is within the scope of the present invention to blend the HDPE of the invention with other polymers, so long as the amount of the other polymers does not unduly detract from the beneficial properties desired in the final product such as, low permeability, low gloss and good processability of the HDPE of the invention. Thus, the HDPE of the invention may be 0.1 to 99.9 weight percent of the polymer blend.

As discussed above, the polyolefin catalysts utilized herein exhibit very high activity which is at least partially dependent upon the olefin polymerization conditions, and provide a polymer with excellent fluff morphology. Thus, the catalysts useful in the present invention provide for large polymer particles having a uniform distribution of sizes, wherein the average resin particle size is between 200 to 400 microns, and small, extremely fine particles (less than 125 microns) are only present in low concentrations.

The catalysts useful in producing the resins of the present invention may be any catalyst known in the art for the polymerization of polyethylene, such as, for example, any Ziegler-Natta catalyst known in the art. Ziegler-Natta catalysts especially useful in the polymerization processes of the invention include the Ziegler-Natta catalysts disclosed in U.S. Patent No. 6,174,971, issued January 16, 2001 to Chen et al., and those disclosed in the following co-pending application:

EXAMPLES

The invention having been generally described, the following examples are provided merely to illustrate certain embodiments of the invention. It is understood that the examples are given by way of illustration and are not intended to limit the specification or the claims to follow in any manner.

The properties of the HDPE polymer and films of the invention provided herein were obtained using methods known in the art as follows:

Molecular weight and polydispersity (MWD)

The molecular weights $M_w$ and $M_n$ and the resultant polydispersity (MWD = $M_w/M_n$) were measured by gel permeation chromatography (GPC).

Density

The density was determined in accordance with ASTM D1505 or ASTM D792.

Rheological breadth parameter

The rheological breadth parameter is a function of the relaxation time distribution of the resin, which in turn is a function of a resin's molecular architecture. The breadth parameter is experimentally determined assuming Cox-Merz rule by fitting flow curves generated using linear-viscoelastic dynamic oscillatory frequency sweep experiments with a modified Carreau-Yasuda (CY) model,

$$(1) \qquad \eta = \eta_B \left[ 1 + (\lambda \gamma)^a \right]^{(n-1)/a}$$

where

$\eta$ = viscosity (Pa s)
$\gamma$ = shear rate (l/s)
a = rheological breadth parameter [CY model parameter which describes the breadth of the transition region between Newtonian and power law behavior]
$\lambda$ = relaxation time sec [CY model parameter which describes the location in time of the transition region]
$\eta_B$ = zero shear viscosity (Pa s) [CY model parameter which defines the Newtonian plateau]
n = power law constant [CY model parameter which defines the final slope of the high shear rate region].

To facilitate model fitting, the power law constant (n) is held to a constant value (n = 0). Experiments were carried out using a parallel plate geometry and strains within the linear viscoelastic regime over a frequency range of 0.1 to 316.2 sec$^{-1}$. Frequency sweeps were performed at three temperatures (170 °C, 200 °C and 230 °C) and the data was shifted to form a mastercurve at 190 °C using known time-temperature superposition methods.

Melt Index, Haze and Gloss

The melt index was determined in accordance with ASTM D1238; haze was measured in accordance with ASTM D1003; and gloss was measured in accordance with ASTM D-2457-70.

Example 1 Production and Data for a HDPE Resin of the Invention.

The catalyst system of the present invention displays polymerization characteristics that favor the formation of highly linear polyethylene. Table 1 summarizes run conditions and polymer properties given by an ATOFINA catalyst, referred to as the X2 catalyst which is a member of the HC4X-family of ATOFINA catalysts, useful in the present invention in a Phillips loop application. Note that the HDPE of the invention utilized for Examples 2-4 were produced according to Example 1.

In addition to possessing excellent intrinsic activity and low fouling potential under aggressive polymerization conditions, the catalyst provides HDPE powder with a morphology especially suitable amiable to Phillips loop applications.

In particular, the catalyst provides a low level of polymer fines and a high bulk density. Furthermore, the powder is robust enough to maintain morphological integrity at the high mechanical shears seen in production. This morphology allows high slurry concentrations to be run which, in turn, allows for high reactor residence times and catalyst productivity exceeding 70,000 g HDPE per g catalyst. These conditions ensure extremely low catalyst residues.

Table 1 Production and Product Data For a Resin of the Invention made by Phillips Loop Process

| Parameter | Value |
|---|---|
| Ethylene Feed | $2,6.10^{-2}$ kg (57.4 mlbs) |
| Isobutane Feed | $2,7.10^{-2}$ (59.8 mlbs) |
| C4/C2 Feed | 1,04 kg/kg (1.04 lbs/lbs) |
| MI2 | 1.09 dg/min |
| MWD = Mw/Mn | 4.2 |
| Density | 0.9602 |
| Average Particle Size | 260 microns |

The catalysts useful in the present invention have the unique characteristic of having little or no long chain branching (LCB). The narrow GPC polydispersity values (Mw/Mn generally less than about 7.0, preferably less than about 6.5, most preferably less than about 6.0) and extremely low shear thinning behavior of the HDPE polymer of the invention are indicative of an extremely linear resin. While a portion of this behavior can be attributed to the unique properties of the catalyst which allow production to proceed under conditions strongly favoring forward polymerization (and suppress beta-hydrogen elimination), the architecture of the polymer produced is intrinsically different than those previously reported in the art.

Example 2 Production and Data for a HDPE Resin of the Invention.

A comparison of densities versus melt flow properties for a homopolymer of the invention compared to that of a conventional homopolymer has been done under equivalent melt flows and run conditions, the homopolymer of the invention has a higher density than the conventional homopolymer. Based on the observation that the MWD of the two resins are not significantly different, it is concluded that the homopolymer of the invention is an intrinsically more linear polymer than conventional homopolymer.

Example 3 Production of a Blown Film using Polyethylene of the Present Invention.

Films were made in the pocket on the Alpine film line. This is typical for medium molecular weight high density polyethylene (MMW-HDPE). The temperature profile, screw speed, and other controlled processing variables are provided in Table 2.

Table 2. Alpine processing conditions

| Extruder RPM | 100 | 100 |
|---|---|---|
| Zone 1°C (°F.) | 148.8 (300) | 182.2 (360) |
| Zone 2°C (°F.) | 204.4 (400) | 187.7 (370) |
| Zone 3°C (°F.) | 204.4 (400) | 193.3 (380) |
| Die 1°C (°F.) | 204.4 (400) | 198.9 (390) |
| Die 2°C (°F.) | 204.4 (400) | 204.4 (400) |
| Die 3°C (°F.) | 204.4 (400) | 204.4 (400) |
| Die Gap (mm) | 0.9 | 0.9 |
| Neck Height m (inches) | 0 | 0 |
| Film Thickness $\mu$m (mils) | 7.6 (0.3), 12.7 (0.5), 25.4 (1.0), 50.8 (2.0) | 38.1 (1.5), 76.2 (3.0) |

A comparison of the haze and gloss properties, respectively, of high density polyethylene grades of similar MI and densities has been done. The surprising clarity and high gloss, respectively is achieved with a high density polyethylene of the present invention.

Example 4 Carreau-Yasuda Parameters and Activation Energy for HDPE of the invention.

Table 3 provides Carreau-Yasuda parameters and activation energy for four different HDPE resins of the invention (HDPE 1, HDPE 2, HDPE 3, and HDPE 4) and one conventional HDPE resin (Conv.). HDPE 2-4 were produced using the catalyst described in Example 1, and HDPE 1 was produced using a more costly, well-known conventional catalyst referred to as Lynx 100.

Table 3 Carreau-Yasuda Parameters and Activation Energy for HDPE Resins of the invention.

| HDPE Resin | Zero Shear Viscosity (Pa/sec) | Relaxation Time (sec) | "a" Parameter | Breadth Power Law Index | Activation Energy (kj/mol) |
|---|---|---|---|---|---|
| Conv. | 3.00E+04 | 1.08E+02 | 0.224 | 0 | 26.71 |
| HDPE 1 | 7.95E+03 | 6.76E-03 | 0.393 | 0 | 26.90 |
| HDPE 2 | 1.17E+-4 | 7.67E-03 | 0.332 | 0 | 27.61 |
| HDPE 3 | 9.94E+03 | 6.445E-03 | 0.338 | 0 | 26.26 |
| HDPE 4 | 1.01E+04 | 5.667E-03 | 0.339 | 0 | 27.35 |

While the illustrative embodiments of the invention have been described with particularity, it will be understood that various other modifications will be apparent to and can be readily made by those skilled in the art without departing from the spirit and scope of the invention. Accordingly, it is not intended that the scope of the claims appended hereto be limited to the examples and descriptions set forth herein but rather that the claims be construed as encompassing all the features of patentable novelty which reside in the present invention, including all features which would be treated as equivalents thereof by those skilled in the art to which this invention pertains.

**Claims**

1. Use of an ethylene polymer having a density greater than 0.950 g/cm$^3$, a molecular weight distribution of less than 7.0, and a rheological breadth parameter of greater than 0.25 to produce at least one layer of a blown film.

2. Use according to claim 1 wherein the polymer has a density greater than 0.955 g/cm$^3$ and wherein the polymer is a polyethylene homopolymer.

3. A blown film comprising at least one layer wherein said layer consists of ethylene polymer having a density greater than 0.950 g/cm$^3$, a molecular weight distribution of less than 7.0 and a rheological breadth parameter of greater than 0.25.

4. The film according to claim 3 wherein the ethylene polymer has a density greater than 0.955 g/cm$^3$ and wherein the polymer is a polyethylene homopolymer.

5. The film of claim 3 wherein said layer has a thickness in the range of up to 12.7 10$^{-5}$ m (5.0 mil).

6. The film of claim 5 wherein the layer comprises a haze value of less than 30%.

7. The film of claim 6 wherein the layer comprises a gloss value of greater than 20.

8. The film of claim 3 further comprising a second layer wherein said second layer comprises m-LLDPE, LLDPE, LDPE, or any combination thereof.

9. The film of claim 8 further comprising a third layer wherein said third layer comprises ethylenevinyl-acetate or a low density polyethylene, and wherein said second layer is positioned between said first and third layers.

10. A process for producing a film, the process comprising the steps of:

   a) blowing a composition on a film line extruder to produce at least one layer of a film,

   wherein said composition consists of ethylene polymer having a density greater than 0.950 g/cm$^3$, a molecular

weight distribution of less than 7.0 and a rheological breadth parameter of greater than 0.25.

11. The process of claim 10 wherein the polymer has a density greater than 0.955 g/cm$^3$ and wherein the polymer is a polyethylene homopolymer.

12. The process of claim 10 wherein said extruder is configured in the pocket comprising a neck height of about zero 2.54 10$^{-2}$ m (zero inches).

13. The process of claim 10 wherein said film is a monolayer film having a thickness of up to 12.7 10$^{-5}$ m (5.0 mil).

14. The process of claim 13 wherein said film comprises a haze value of less than 30%.

15. The process of claim 14 wherein said film comprises a gloss value of greater than 20.

16. The process of claim 10 wherein said film comprises at least two layers and is a coextruded blown film.


**Patentansprüche**

1. Verwendung eines Ethylenpolymers mit einer Dichte von mehr als 0,950 g/cm$^3$, einer Molmassenverteilung von weniger als 7,0 und einem rheologischen Breitenparameter von mehr als 0,25 zur Produktion zumindest einer Schicht einer Blasfolie.

2. Verwendung gemäß Anspruch 1, wobei das Polymer eine Dichte von mehr als 0,955 g/cm$^3$ hat und wobei das Polymer ein Polyethylen-Homopolymer ist.

3. Eine Blasfolie, die zumindest eine Schicht umfasst, wobei besagte Schicht aus Ethylenpolymer mit einer Dichte von mehr als 0,950 g/cm$^3$, einer Molmassenverteilung von weniger als 7,0 und einem rheologischen Breitenparameter von mehr als 0,25 besteht.

4. Die Folie gemäß Anspruch 3, wobei das Ethylenpolymer eine Dichte von mehr als 0,955 g/cm$^3$ hat und wobei das Polymer ein Polyethylen-Homopolymer ist.

5. Die Folie von Anspruch 3, wobei besagte Schicht eine Dicke im Bereich von bis zu 12,7 10$^{-5}$ m (5,0 mil) hat.

6. Die Folie von Anspruch 5, wobei die Schicht einen Trübungswert von weniger als 30% aufweist.

7. Die Folie von Anspruch 6, wobei die Schicht einen Glanzwert von mehr als 20 aufweist.

8. Die Folie von Anspruch 3, die weiter eine zweite Schicht umfasst, wobei besagte zweite Schicht m-LLDPE, LLDPE, LDPE oder jede Kombination davon umfasst.

9. Die Folie von Anspruch 8, die weiterhin eine dritte Schicht umfasst, wobei besagte dritte Schicht Ethylenvinylacetat oder ein niedrigdichtes Polyethylen umfasst und wobei besagte zweite Schicht zwischen besagter erster und dritter Schicht positioniert ist.

10. Ein Prozess zur Herstellung einer Folie, wobei der Prozess des Schritte umfasst des :

   a) Blasens einer Zusammensetzung auf einem Folienproduktionslinienextruder, um zumindest eine Schicht einer Folie zu produzieren,

   wobei besagte Zusammensetzung aus Ethylenpolymer mit einer Dichte von mehr als 0,950 g/cm$^3$, einer Molmassenverteilung von weniger als 7,0 und einem rheologischen Breitenparameter von mehr als 0,25 besteht.

11. Der Prozess von Anspruch 10, wobei das Polymer eine Dichte von mehr als 0,955 g/cm$^3$ hat und wobei das Polymer ein Polyethylen-Homopolymer ist.

12. Der Prozess von Anspruch 10, wobei besagter Extruder im Fach konfiguriert ist, umfassend eine Ansatzhöhe von etwa null 2,54 10$^{-2}$ m (null Zoll).

13. Der Prozess von Anspruch 10, wobei besagte Folie eine Einschichtfolie mit einer Dicke von bis zu 12,7 10$^{-5}$ m (5,0 mil) ist.

14. Der Prozess von Anspruch 13, wobei besagte Folie einen Trübungswert von weniger als 30% aufweist.

15. Der Prozess von Anspruch 14, wobei besagte Folie einen Glanzwert von mehr als 20 aufweist.

16. Der Prozess von Anspruch 10, wobei besagte Folie zumindest zwei Schichten umfasst und eine coextrudierte Blasfolie ist.


**Revendications**

1. Utilisation d'un polymère d'éthylène possédant une densité supérieure à 0,950 g/cm$^3$, une distribution du poids moléculaire inférieure à 7,0 et un paramètre de largeur rhéologique supérieur à 0,25 pour la production d'au moins une couche d'une feuille mince soufflée.

2. Utilisation selon la revendication 1, dans laquelle le polymère possède une densité supérieure à 0,955 g/cm$^3$ et dans laquelle le polymère est un homopolymère de polyéthylène.

3. Feuille mince soufflée comprenant au moins une couche, dans laquelle ladite couche est constituée d'un polymère d'éthylène possédant une densité supérieure à 0,950 g/cm$^3$, une distribution du poids moléculaire inférieure à 7,0 et un paramètre de largeur rhéologique supérieur à 0,25.

4. Feuille mince selon la revendication 3, dans laquelle le polymère d'éthylène possède une densité supérieure à 0,955 g/cm$^3$ et dans laquelle le polymère est un homopolymère de polyéthylène.

5. Feuille mince selon la revendication 3, dans lequel ladite couche possède une épaisseur dans la plage s'élevant jusqu'à 12,7.10$^{-5}$ m (5,0 millièmes de pouce).

6. Feuille mince selon la revendication 5, dans laquelle la couche comprend une valeur de trouble inférieure à 30 %.

7. Feuille mince selon la revendication 6, dans laquelle la couche comprend une valeur de brillant supérieure à 20.

8. Feuille mince selon la revendication 3, comprenant en outre une deuxième couche, ladite deuxième couche comprenant du m-LLDPE, du LLDPE, du LDPE ou l'une quelconque de leurs combinaisons.

9. Feuille mince selon la revendication 8, comprenant en outre une troisième couche, ladite troisième couche comprenant un copolymère d'éthylène-acétate de vinyle ou un polyéthylène basse densité, ladite deuxième couche étant disposée entre lesdites première et troisième couches.

10. Procédé pour la fabrication d'une feuille mince, le procédé comprenant les étapes consistant à :

a) soumettre à un soufflage une composition sur une extrudeuse possédant une ligne de production pour feuilles minces dans le but de fabriquer au moins une couche d'une feuille mince,

ladite composition étant constituée d'un polymère d'éthylène possédant une densité supérieure à 0,950 g/cm$^3$, une distribution du poids moléculaire inférieure à 7,0 et un paramètre de largeur rhéologique supérieur à 0,25.

11. Procédé selon la revendication 10, dans lequel le polymère possède une densité supérieure à 0,955 g/cm$^3$ et dans lequel le polymère est un homopolymère de polyéthylène.

12. Procédé selon la revendication 10, dans lequel ladite extrudeuse prend la forme d'une poche comprenant une hauteur de striction d'environ zéro 2,54.10$^{-2}$ m (zéro pouce).

13. Procédé selon la revendication 10, dans lequel ladite feuille mince est une feuille mince monocouche possédant une épaisseur dans la plage s'élevant jusqu'à 12,7.10$^{-5}$ m (5,0 millièmes de pouce).

**14.** Procédé selon la revendication 13, dans lequel ladite feuille mince comprend une valeur de trouble inférieure à 30 %.

**15.** Procédé selon la revendication 14, dans lequel ladite feuille mince comprend une valeur de brillant supérieure à 20.

**16.** Procédé selon la revendication 10, dans lequel ladite feuille mince comprend au moins deux couches et est soumise à une coextrusion pour obtenir une feuille mince soufflée.